# EUROPEAN PATENT APPLICATION

(11) **EP 4 358 239 A1**
(43) Date of publication of application: **24.04.2024**
(21) Application number: 22889212.1
(22) Date of filing: 28.10.2022
(51) Int. Cl.: H01M 10/6557

(54) **BATTERY PACK, THERMAL MANAGEMENT SYSTEM OF BATTERY, AND ELECTRIC DEVICE**

(30) Priority: 05.11.2021 CN 202122698150 U
(71) Applicant: Contemporary Amperex Technology Co., Limited, Ningde, Fujian 352100 (CN)
(72) Inventor: YANG, Piaopiao, Ningde, Fujian 352100 (CN); CHEN, Xiaobo, Ningde, Fujian 352100 (CN); BAI, Jingfeng, Ningde, Fujian 352100 (CN); WANG, Xuehui, Ningde, Fujian 352100 (CN)
(74) Representative: Ran, Handong
(86) International application number: PCT/CN2022/128434
(87) International publication number: WO 2023/078187

(57) **Abstract**

The present application provides a battery pack, a thermal management system of a battery, and an electric device. The battery pack comprises a plurality of battery cells and at least one elongated heat exchange tube. The battery cells are arranged next to each other, and each heat exchange tube is located in a gap formed between adjacent battery cells. According to the present application, the battery cells can be cooled more uniformly, and the utilisation rate of the surrounding space of each battery cell can be improved.

## Description

This application claims priority to Chinese Patent Application No. 202122698150.2, titled "BATTERY MODULE, BATTERY THERMAL MANAGEMENT SYSTEM, AND ELECTRIC DEVICE" and filed on November 05, 2021, the entire contents of which are incorporated herein by reference.

### TECHNICAL FIELD

The present disclosure relates to the field of batteries, and more particularly, to a battery module, a battery thermal management system, and an electric device.

### BACKGROUND

Energy conservation and emission reduction is the key to sustainable development of the automobile industry. In this case, electric vehicles have become an important part of the sustainable development of the automobile industry due to their energy saving and environmentally friendly advantages. In addition, for the electric vehicles, battery technology is an important factor in its development.

In the development of the battery technologies, in addition to enhancing battery performance, thermal management issue of the battery (including battery cooling and warming) and the resulting safety issue are non-negligible problems. Therefore, how to improve efficiency and effect of the thermal management is an urgent technical problem to be solved in the battery technology.

### SUMMARY

### TECHNICAL PROBLEM

The present disclosure is made in view of technical problems of efficiency and effect of thermal management of a battery. An object of the present disclosure is to provide a battery module, a battery thermal management system, and an electric device, which are capable of improving the efficiency and effect of thermal management, thereby improving safety.

### SOLUTION TO THE TECHNICAL PROBLEM

### TECHNICAL SOLUTION

In order to achieve the above object, a first aspect of the present disclosure provides a battery module. The battery module includes a plurality of battery cells arranged proximate to each other, and at least one heat exchange tube of an elongated shape. Each of the at least one heat exchange tube is located in a gap defined between adjacent ones of the plurality of battery cells. The heat exchange tube is provided with a temperature sensor at an outer surface of the heat exchange tube.

In some embodiments, the battery module includes more than three battery cells. The least one heat exchange tube is disposed in a gap formed by every three battery cells of the plurality of battery cells.

Therefore, the heat exchange tube is equipped around each battery cell based on an arrangement of the battery cells. In this way, it is possible to improve heat exchange efficiency of the battery cell.

In some embodiments, each of the plurality of battery cells is a cylindrical battery cell.

Therefore, the heat exchange tube is equipped near each of the plurality of cylindrical battery cells arranged proximate to each other. The heat exchange tube can cool or heat the battery cell in the axial direction of the cylindrical battery cell. Therefore, the heat exchange efficiency can be improved.

In some embodiments, at least one heat exchange tube is formed in a prism shape, and is configured to fill the gap formed by every three cylindrical battery cells.

Therefore, since the at least one heat exchange tube is formed into the prism shape capable of filling the gap formed by every three cylindrical battery cells, the heat exchange tube can be placed without increasing the gap between the adjacent cylindrical battery cells. Moreover, the heat exchange tube of the prism shape can be attached to the outer peripheral surface of the cylindrical battery cell around the heat exchange tube better. Therefore, cooling or heating can be performed with a better heat exchange effect in the axial direction of the cylindrical battery cell, thereby improving the heat exchange efficiency.

In some embodiments, the at least one heat exchange tube is formed into the elongated shape in the axial direction of the cylindrical battery cell, and has an arc-shaped surface following a shape of a part of an outer peripheral surface of each cylindrical battery cell.

Therefore, since the heat exchange tube has the arc-shaped surface following the shape of the part of the outer peripheral surface of each cylindrical battery cell, the attachment degree between the heat exchange tube and the outer surface of the cylindrical battery cell can be further improved. As a result, the heat exchange effect can be further improved.

In some embodiments, the at least one heat exchange tube is of a hollow structure. Further, the at least one heat exchange tube internally has a heat exchange flow passageway. The at least one heat exchange tube has an end connected to an input pipeline of a heat exchange medium and another end connected to an output pipeline of the heat exchange medium. The heat exchange flow passageway of the heat exchange tube is in communication with the input pipeline and the output pipeline of the heat exchange medium.

Therefore, it is possible for the heat exchange medium to circulate in the heat exchange tube. Therefore, the heat exchange effect can be improved.

In some embodiments, the input pipeline and the output pipeline of the heat exchange medium are disposed at two end sides of the battery cell in an axial direction of the battery cell and opposite to each other, with the plurality of battery cells interposed between the input pipeline and the output pipeline of the heat exchange medium.

Therefore, by respectively arranging the input pipeline and the output pipeline of the heat exchange medium at the two sides of the battery cell in the axial direction of the battery cell, a complex connection structure between the heat exchange tube and the input pipeline and the output pipeline of the heat exchange medium can be avoided. In addition, no complex pipelines are additionally required.

In some embodiments, each of the input pipeline and the output pipeline of the heat exchange medium extends in an arrangement direction of the plurality of battery cells.

Therefore, since the input pipeline and the output pipeline of the heat exchange medium with corresponding lengths can be arranged based on the arrangement of the battery cells, the cooling or heating of each battery cell can be ensured with a simple structure. Therefore, the structure is simple, and the use safety of the battery is improved.

In some embodiments, the temperature sensor is disposed at an outer surface of the at least one heat exchange tube in contact with a middle part of each of the plurality of battery cells in a length direction of the battery cell.

Therefore, since the temperature sensor is disposed at the position where the temperature sensor is in contact with the part of the battery cell having a high temperature, a change in the temperature of the battery cell can be reliably monitored. In addition, the use safety of the battery can be reliably ensured.

A second aspect of the present disclosure provides a battery thermal management system applied in a battery. The battery includes a plurality of battery cells arranged proximate to each other. The battery thermal management system includes at least one heat exchange tube, a temperature sensor, and a signal acquisition circuit. The at least one heat exchange tube is located in a gap formed between adjacent ones of the plurality of battery cells. The temperature sensor is disposed at an outer surface of the at least one heat exchange tube in contact with each of the plurality of battery cells. The signal acquisition circuit is electrically connected to the temperature sensor and configured to receive a signal from the temperature sensor.

According to the second aspect of the present disclosure, since the heat exchange tube is disposed in the gap between the adjacent battery cells, each battery cell can be effectively cooled or heated. In addition, since the temperature sensor is disposed at the outer surface of the heat exchange tube in contact with the battery cell, an internal temperature of the battery cell can be monitored more accurately. Further, since the signal acquisition circuit for receiving the signal from the temperature sensor is provided, thermal management can be carried out based on the temperature data measured by the temperature sensor. Therefore, the safety can be improved.

In some embodiments, the battery thermal management system further includes an input pipeline and an output pipeline of a heat exchange medium. The least one heat exchange tube internally has a heat exchange flow passageway. The heat exchange flow passageway of the least one heat exchange tube is in communication with the input pipeline and the output pipeline of the heat exchange medium to form a circulation flow passageway of the heat exchange medium.

In this way, it is possible to for the exchange medium to circulate in the heat exchange tube. Therefore, it is possible to improve the heat exchange effect and ensure the heat management efficiency.

In some embodiments, each of the plurality of battery cells is a cylindrical battery cell. The temperature sensor is disposed at an outer surface of the at least one heat exchange tube in contact with a middle part of the cylindrical battery cell in a length direction of the cylindrical battery cell.

Since the temperature sensor is disposed at the position where the temperature sensor is in contact with the part of the battery cell having the high temperature, the change in the temperature of the battery cell can be reliably monitored to carry out the thermal management of the battery. Therefore, the use safety of the battery can be further ensured.

A third aspect of the present disclosure provides an electric device including the battery module according to the embodiments of the third aspect of the present disclosure.

Therefore, safety of using the battery module by the electric device can be ensured.

A fourth aspect of the present disclosure provides an electric device. The electric device includes a battery including a plurality of battery cells arranged proximate to each other, and the battery thermal management system according to the embodiments of the second aspect of the present disclosure.

Therefore, safety of using the battery module by the electric device can be ensured.

### ADVANTAGEOUS EFFECT OF PRESENT APPLICATION

### ADVANTAGEOUS EFFECT

According to the embodiments of the first aspect of the present disclosure, since the heat exchange tube is equipped in the gap formed between the adjacent battery cells, each battery cell can be effectively cooled or heated. Moreover, overall miniaturization of the batteries can be realized by effectively utilizing a space between the battery cells. In addition, by making full use of the space between the battery cells, grouping efficiency of the batteries can also be improved, which further improves an energy density of the battery.

In addition, since the temperature sensor is disposed at an outer surface of the heat exchange tube close to each battery cell, the temperature of the battery can be monitored more accurately, thereby improving the safety.

### BRIEF DESCRIPTION OF THE DRAWINGS

FIG. 1 is a schematic structural view of a vehicle according to an embodiment of the present disclosure.
FIG. 2 is a schematic view of a battery cell according to an embodiment of the present disclosure.
FIG. 3 is a schematic view of a heat exchange tube according to an embodiment of the present disclosure.
FIG. 4 is a schematic view of a configuration of a battery cell and a heat exchange tube according to an embodiment of the present disclosure.
FIG. 5 is a schematic view of a configuration of a battery cell and a heat exchange tube according to another embodiment of the present disclosure.
FIG. 6 is a schematic exploded view of a battery cell and a battery management system according to an embodiment of the present disclosure.

Description of reference signs of the drawings:
1-battery cell (cylindrical battery cell); 2-heat exchange tube; 3-input pipeline; 4-output pipeline; 5-temperature sensor; 6-signal acquisition circuit; 31-heat exchange medium inlet; 32-heat exchange medium input port; 41-heat exchange medium outlet; 42-heat exchange medium output port; 1000-vehicle; 100-battery; 200-controller; 300-motor.

### DETAILED DESCRIPTION

Specific implementations of the present disclosure are described below in detail with reference to the accompanying drawings. The accompanying drawings are used for illustrating preferred embodiments of the present disclosure only, rather than being considered to limit the present disclosure. In addition, same parts or elements are denoted by same reference numerals throughout the accompanying drawings.

Advantages and benefits of the present disclosure will become apparent to those skilled in the art after reading the detailed description of the implementations given below. The following embodiments are only used to explain the technical solutions of the present disclosure more clearly, and therefore should be exemplary, rather than be construed as limitations of the protection scope of the present disclosure.

It should be noted that, unless otherwise defined, technical terms and scientific terms used herein should be the normal meaning understood by those skilled in the art of the embodiments of the present disclosure.

In the description of the embodiments of the present disclosure, the orientation or the position indicated by technical terms such as "center", "longitudinal", "lateral", "length", "width", "thickness", "over", "below", "front", "rear", "left", "right", "top", "bottom", "inner", and "outer" should be construed to refer to the orientation and the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the embodiments of the present disclosure.

In addition, in the description of the embodiments of the present disclosure, "plurality" means at least two, unless otherwise specifically defined.

In the description of the embodiments of the present disclosure, unless otherwise clearly specified and limited, technical terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

In the description of the embodiments of the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

A method for manufacturing a battery such as a secondary battery includes grouping a battery formed by a plurality of battery cells. Currently, for example, during the grouping of cylindrical battery cells having tabs at two ends of the cylindrical battery cells, the tabs of several battery cells are connected in series end to end to form a plurality of columns of battery cells. Further, several columns of battery cells are connected in parallel to form a plurality of layers of battery cells. The plurality of layers of battery cells may be stacked to form a battery meeting energy and power requirements. The plurality of layers of battery cells arranged in array is separated and supported by a support plate. Generally, the support plate also has a heat management function such as cooling or heating.

For example, a heat exchange plate such as the above cooling plate is manufactured to have a wavy plate surface and is disposed at a side of the battery cells arranged in one layer in such a manner that the heat exchange plate is attached to an outer surface of the cylindrical battery cell. However, such conventional heat exchange plate may carry out heat exchange only through contact with the battery cell from one side or two opposite sides of the battery cell. Therefore, for each battery cell, circumferential heat exchange is non-uniform, resulting in risks to use safety of the battery. Moreover, there is a small contact area between the heat exchange plate and each battery cell. Therefore, it is desired that the heat exchange efficiency will be further improved.

In addition, the thermal management system cannot accurately monitor a temperature of the battery. Therefore, a problem of performing effective thermal management on the battery has not been solved.

In view of various problems described above, through research, it has been found when a heat exchange member is disposed around each battery cell, the heat exchange effect on each battery cell would be improved, thereby enhancing the safety. Moreover, when a temperature around the battery cell is accurately monitored, effective thermal management can be carried out based on monitored temperature data.

Therefore, in order to solve the above problems, embodiments of the present disclosure provide a battery module, a battery thermal management system, and an electric device.

The battery involved in the present disclosure may be any battery, such as a battery module and a battery pack, or a primary battery and a rechargeable battery. For example, the rechargeable battery includes a nickel-hydrogen battery, a nickel-cadmium battery, a lead-acid (or lead storage) battery, a lithium ion battery, a sodium ion battery, a polymer battery, and the like. Such batteries are suitable for various electric devices that use the battery, such as a cell phone, a portable device, a notebook computer, an electric scooter, an electric toy, an electric tool, an electric vehicle, a ship, or a spacecraft. For example, the spacecraft includes an airplane, a rocket, a space shuttle, a spacecraft, and the like. The battery is used for supplying power to the electric device.

It should be understood that the technical solutions described in the embodiments of the present disclosure are not limited to the battery and the electric devices described above, and may also be applicable to all batteries and electric devices that use the batteries. However, in order to make the description simple, the following embodiments will be described by taking the electric vehicle as an example. Obviously, an applicable scenario of the battery and the electric device involved in the embodiments of the present disclosure are not limited to the electric vehicle.

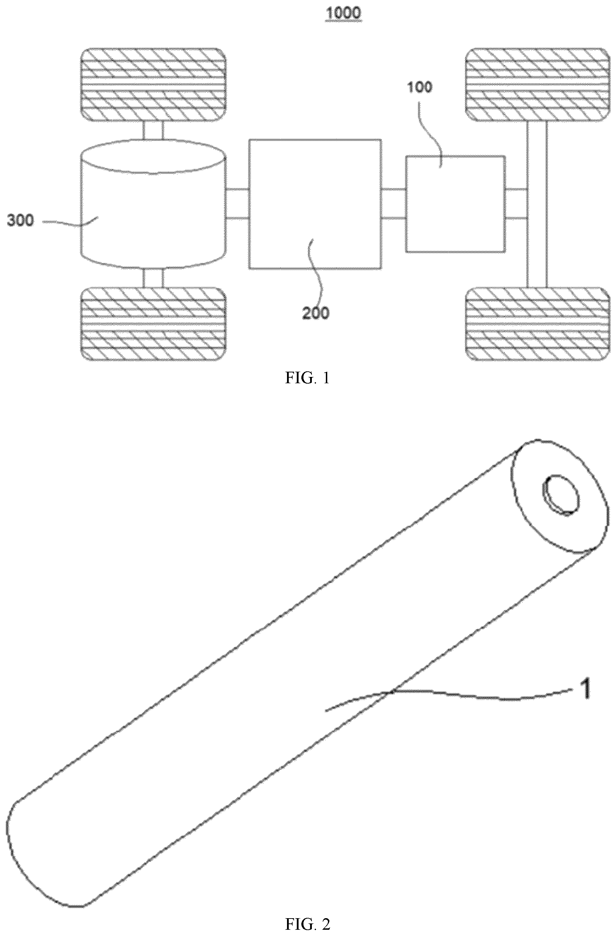

FIG. 1 is a schematic structural view of a vehicle 1000 according to an embodiment of the present disclosure. As illustrated in FIG. 1, the vehicle 1000 may be a fuel vehicle, a gas vehicle, or a new energy vehicle. The new energy vehicle may be a battery electric vehicle, a hybrid electric vehicle, an extended range vehicle, or the like. The vehicle 1000 is equipped with a battery 100. The battery 100 may be disposed at a bottom, a front part, or a rear part of the vehicle 1000. The battery 100 may be configured to supply power to the vehicle 1000. For example, the battery 100 may serve as an operational power source of the vehicle 1000. The vehicle 1000 may further include a controller 200 and a motor 300. The controller 200 is configured to control the battery 100 to supply power to the motor 300, e.g., for operational power needs in starting, navigation, and traveling of the vehicle 1000.

In some embodiments of the present disclosure, the battery 100 may not only serve as the operational power source of the vehicle 1000, but also serve as a drive power source of the vehicle 1000 to provide drive power for the vehicle 1000 completely or partially instead of a fuel oil or a natural gas.

In order to satisfy different usage requirements, the battery 100 may include a plurality of battery cells 1. The battery cell 1 refer to a minimum unit that forms a battery module or a battery pack. The plurality of battery cells 1 may be connected in series and/or in parallel through an electrode terminal to be applied in various application scenarios. The battery involved in the present disclosure may include a battery module or a battery pack. The plurality of battery cells 1 may be connected in series, in parallel, or in series and parallel. The expression "in series and parallel" means that the plurality of battery cells 1 is connected both in series and in parallel. The battery in the embodiments of the present disclosure may be directly composed of a plurality of battery cells 1, or may first form a battery module, and then the battery module forms the battery.

FIG. 2 schematically shows a schematic view of a battery cell according to an embodiment of the present disclosure. In some embodiments, the battery cell 1 may be a lithium-ion battery, a sodium-ion battery, a magnesium-ion battery, or the like, and the present disclosure is not limited in this regard. The battery cell 1 may be in a shape of a cylinder, a flat body, a cuboid, or the like, which is not limited to the embodiments of the present disclosure. The battery cell 1 is generally divided into three types based on a packaging manner, i.e., a cylindrical battery cell, a cubic and square battery cell, and a pouch battery cell, and the present disclosure is not limited in this regard. The cylindrical battery cell may be divided into a cylindrical battery cell, a polygonal prism-shaped battery cell, or the like according to a cross-sectional shape of a cylindrical surface of the cylindrical battery cell. However, for brevity of the description, the following embodiments are each described by taking the cylindrical battery cell 1 as an example.

In addition, although not specifically illustrated, the battery cell 1 in this embodiment of the present disclosure generally includes an end cover, a housing, and a battery cell assembly.

The end cover refers to a component covering an opening of the housing to isolate an internal environment of the battery cell 1 from an external environment. Without limitation, a shape of the end cover may be mated with a shape of the housing to cooperate with the housing. In some embodiments, the end cover may be made of a material with predetermined hardness and strength (e.g., an aluminum alloy). In this way, the end cover is less likely to be deformed when being subjected to compression and collision. Therefore, the battery cell 1 has a higher structural strength and improved safety performance. Functional components such as an electrode terminal may be disposed at the end cover. The electrode terminal is configured to be electrically connected to the battery cell assembly to output or input electric energy of the battery cell 1. The end cover may be made of a variety of materials, such as copper, iron, aluminum, stainless steel, aluminum alloy, and plastic, and the present disclosure is not limited in this regards. In some embodiments, an insulation member may also be disposed at an inner side of the end cover. The insulation member is configured to isolate electrical connection components in the housing from the end cover to reduce short-circuit risk. For example, the insulation member may be made of plastic, rubber, or the like.

The housing is a component cooperating with the end cover to form the internal environment of the battery cell 1. The internal environment can accommodate the battery cell assembly, an electrolyte (not shown), and other components. The housing and the end cover may be independent of each other. An opening may be formed at the housing. The internal environment of the battery cell may be formed by covering the opening with the end cover. Without limitation, the end cover and the housing may also be integrally formed. In some embodiments, a common connection surface may be formed by the end cover and the housing before other components are housed. When an interior of the housing is required to be encapsulated, it is necessary to cover the housing with the end cover. The housing may be in various shapes and may have various dimensions, such as in a cuboid shape, in a cylinder shape, and in a hexagonal prism shape. In a further embodiment, the shape of the housing may be determined based on a specific shape and dimension of the battery cell assembly. The housing may be made of various materials such as copper, iron, aluminum, stainless steel, aluminum alloy, and plastic, and the present disclosure is not limited in this regard. In this embodiment of the present disclosure, the cylindrical battery cell 1 is used as an example for description. Therefore, for example, the housing of the battery cell 1 is in a cylindrical shape.

The battery cell assembly refers to a component of the battery cell 1 where an electrochemical reaction occurs. One or more electrode assemblies may be contained in the housing. The battery cell assembly is mainly formed by winding or stacking a positive plate and a negative plate. Typically, a separator is arranged between the positive plate and the negative plate. Parts of the positive plate and the negative plate that are provided with active substances form a main body portion of the battery cell assembly. Parts of the positive plate and the negative plate that are provided with no active substances each form a tab (not shown). A positive electrode tab and a negative electrode tab may be both located at one end of the main body portion, or may be located at two ends of the main body portion, respectively. During charging or discharging of the battery, a positive electrode active substance and a negative electrode active substance react with the electrolyte. The tab is connected to the electrode terminal to form a current circuit.

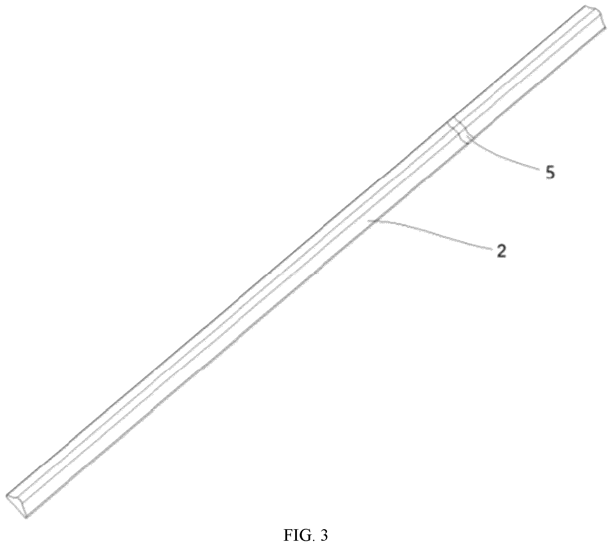

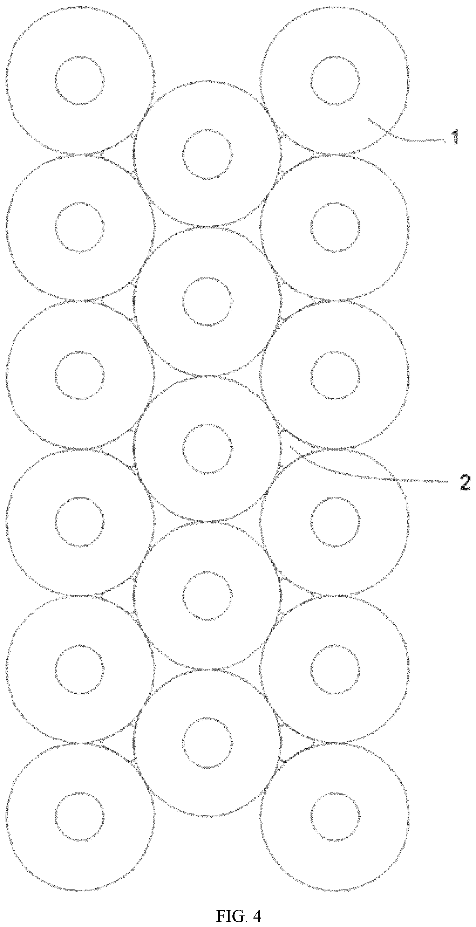

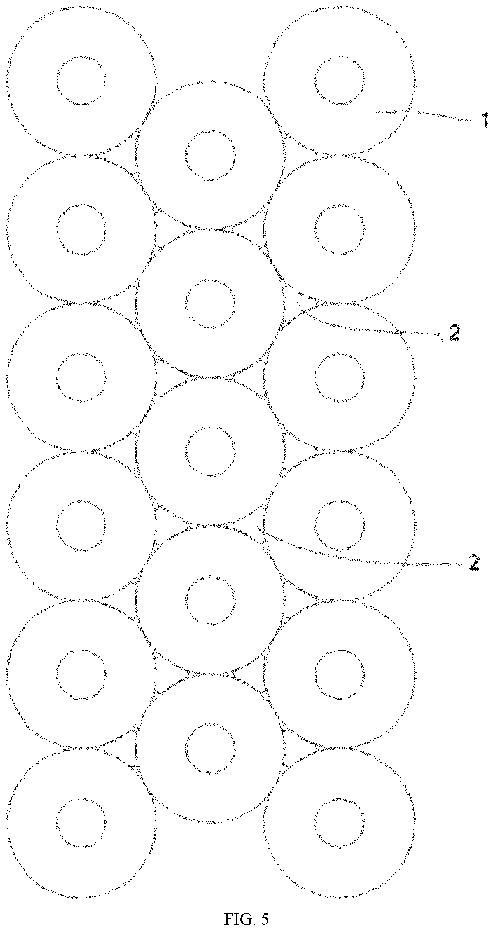

FIG. 3 is a schematic view of a heat exchange tube according to an embodiment of the present disclosure. FIG. 4 and FIG. 5 are schematic views of configurations of a battery cell and a heat exchange tube according to some embodiments of the present disclosure.

The battery module according to an embodiment of the present disclosure includes a plurality of battery cells 1 and at least one heat exchange tube 2 of an elongated shape. As illustrated in FIG. 4 and FIG. 5, the plurality of battery cells 1 is arranged proximate to each other. Each of the at least one heat exchange tube 2 is located in a gap defined between adjacent ones of the plurality of battery cells 1. A temperature sensor 5 (see FIG. 2) is provided at an outer surface of the heat exchange tube 2.

For example, the battery cell 1 is the cylindrical battery cell as described above. These battery cells 1 are arranged in layers. As illustrated in FIG. 4 and FIG. 5, these battery cells 1 are arranged adjacent to each another in such a manner that axial directions of the cylindrical battery cells are substantially parallel to each other for example. As an exemplary embodiment, the plurality of battery cells 1 is arranged in one layer, and then a plurality of layers of battery cells 1 are arranged into an array of the battery cells 1. In addition, the gap between the adjacent battery cells 1 may be set as desired, and the present disclosure is not limited in this regard. However, as an exemplary embodiment, the battery cells are arranged proximate to each other in such a manner that outer peripheral surfaces of the battery cells are in contact with each other.

As illustrated in FIG. 3, the heat exchange tube 2 is formed into the elongated shape. The elongated shape refers to that a dimension of the heat exchange tube 2 in a first direction is greater than a dimension of the heat exchange tube 2 in a second direction Generally, the first direction intersects the second direction. For example, the first direction is perpendicular to the second direction. In an exemplary embodiment, the heat exchange tube 2 may be made of a material with good thermal conductivity. In addition, the heat exchange tube 2 may be a rigid hollow tube, or a flexible hollow tube with a predetermined flexibility.

As illustrated in FIG. 4 and FIG. 5, when the plurality of cylindrical battery cells 1 is arranged proximate to each other, there is a small gap between the adjacent cylindrical battery cells 1. The heat exchange tube 2 of the elongated shape may be interposed into the small gap in such a manner that the first direction of the heat exchange tube 2 is consistent with an axial direction of the cylindrical battery cell 1. Further, the heat exchange tube 2 exchanges heat with the cylindrical battery cell 1 by moving towards the cylindrical battery cell 1 around the heat exchange tube 2 or even contacting with the cylindrical battery cell 1.

As illustrated in FIG. 4, the heat exchange tubes 2 may be interposed into some of the gaps formed by the plurality of cylindrical battery cells 1, rather than being interposed into all of the gaps. The heat exchange tube 2 may also be interposed into all gaps as illustrated in FIG. 5. The gaps into which the heat exchanger tube 2 are interposed and a ratio of gaps into which the heat exchanger tube 2 is interposed to all gaps are not limited in the present disclosure, and may be set as desired, as long as uniform heat exchange of the battery can be ensured to allow the battery to operate at a suitable temperature.

As illustrated in FIG. 2, the temperature sensor 5 is disposed at the outer surface of the heat exchange tube 2. For the temperature sensor 5, the present disclosure is not limited in this regard as long as the temperature sensor 5 can be disposed at the outer surface of the heat exchange tube 2. The temperature sensor 5 may be any known temperature sensor. Further, the temperature sensor 5 may be disposed at any position of the heat exchange tube 2. Considering that the temperature of the cylindrical battery cell 1 can be reflected more accurately, the temperature sensor 5 may be disposed at the outer surface of the heat exchanger tube 2 in contact with the cylindrical battery cell 1. In addition, the temperature sensor 5 may be disposed at an outer surface of each heat exchange tube or at outer surfaces of some of the heat exchange tubes.

According to the embodiments of the present disclosure, since the heat exchange tube 2 is disposed in the gap between the adjacent battery cells 1, each battery cell 1 can be effectively cooled or heated. Moreover, overall miniaturization of the batteries can be realized by effectively utilizing a space between the battery cells 1. By making full use of the space between the battery cells 1, grouping efficiency of the batteries can also be improved, which further improves an energy density of the battery.

In addition, since the temperature sensor 5 is disposed at an outer surface of the heat exchange tube 2 close to each battery cell 1, the temperature of the battery can be monitored more accurately, thereby improving the safety.

In some embodiments, as illustrated in FIG. 5, the battery module includes more than three battery cells 1. The heat exchange tube 2 is disposed in a gap formed by every three battery cells of the plurality of battery cells 1.

Therefore, the heat exchange tube 2 can be equipped around each battery cell 1 based on the arrangement of the battery cells 1. In this way, the heat exchange efficiency of the battery cell 1 can be improved.

In some embodiments, each of the plurality of battery cells is a cylindrical battery cell.

Therefore, the heat exchange tube 2 is equipped near each of the plurality of cylindrical battery cells 1 arranged proximate to each other. The heat exchange tube 2 can cool or heat the battery cell 1 in the axial direction of the cylindrical battery cell 1. Therefore, the heat exchange efficiency can be improved.

In some embodiments, as illustrated in FIG. 3 to FIG. 5, the at least one heat exchange tube 2 is formed in a prism shape, and is configured to fill the gap formed by every three cylindrical battery cells 1.

As illustrated in FIG. 3 to FIG. 5, the prism shape is a triangular prism shape with three chamfered edges. However, heat exchange tube 2 is not limited not to only have three edges in the present disclosure. Such a shape can allow the heat exchange tube 2 to be easily interposed into the gap between the cylindrical battery cells 1 and to further utilize a space in the gap as much as possible.

In this way, since the at least one heat exchange tube 2 is formed into the prism shape capable of filling the gap formed by every three cylindrical battery cells 1, the heat exchange tube can be placed without increasing the gap between the adjacent cylindrical battery cells 1. Moreover, the heat exchange tube 2 of the prism shape can be attached to the outer peripheral surface of the cylindrical battery cell 1 around the heat exchange tube 2 better. Therefore, cooling or heating can be performed with a better heat exchange effect in the axial direction of the cylindrical battery cell 1, thereby improving the heat exchange efficiency.

In some embodiments, the at least one heat exchange tube 2 is formed into the elongated shape in an axial direction of the cylindrical battery cell, and has an arc-shaped surface following a shape of a part of an outer peripheral surface of each cylindrical battery cell 1.

Here, the phase "the arc-shaped surface following the shape of the part of the outer peripheral surface of each cylindrical battery cell 1" refers to that the outer surface of the heat exchange tube 2 in contact with the cylindrical battery cell 1 is formed into the arc-shaped surface. Therefore, the attachment degree between the heat exchange tube 2 and the cylindrical battery cell 1 can be improved. Moreover, it is possible to increase an engagement area between the heat exchange tube 2 and the cylindrical battery cell 1. As a result, the heat exchange effect can be further improved.

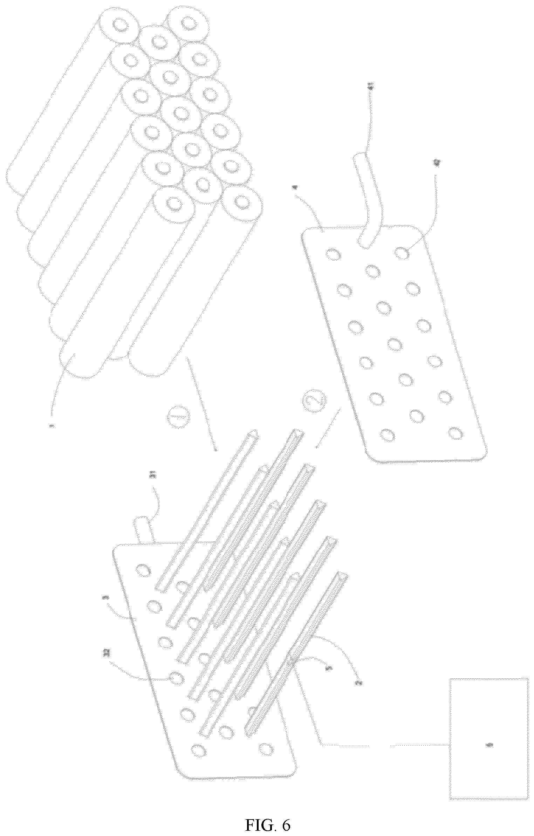

In some embodiments, as illustrated in FIG. 6, the at least one heat exchange tube 2 is of a hollow structure. Further, the at least one heat exchange tube internally has a heat exchange flow passageway. The at least one heat exchange tube 2 has an end connected to an input pipeline 3 of a heat exchange medium and another end connected to an output pipeline 4 of the heat exchange medium. The heat exchange flow passageway of the heat exchange tube 2 is in communication with the input pipeline 3 and the output pipeline 4 of the heat exchange medium.

The heat exchange tube 2 is in communication with the input pipeline and the output pipeline of the heat exchange medium to form a circulation pipeline. Therefore, the battery cell 1 can be cooled or heated by means of circulation of the heat exchange medium. Here, the heat exchange medium may employ a known heat exchange medium suitable use. For example, cooling liquid such as water and ethylene glycol, air, tetrafluorohexane, trifluoromethane, difluoroethane, or the like is possible. In some embodiments, the input pipeline 3 of the heat exchange medium has a heat exchange medium inlet 31. The heat exchange medium enters the input pipeline 3 from the heat exchange medium inlet 31 and further enters the heat exchange flow passageway of the heat exchange tube 2. The heat exchange medium flowing from the heat exchange flow passageway of the heat exchange tube 2 enters the output pipeline 4 of the heat exchange medium. A heat exchange medium outlet 41 is formed at the output pipeline 4. The heat exchange medium in the output pipeline 4 flows out of the heat exchange medium outlet 41. Thus, the circulation of the heat exchange medium is formed. During the circulation, especially when the heat exchange medium flows through the heat exchange flow passageway of the heat exchange tube 2, the heat exchange medium exchanges heat with the battery cell 1 through the heat exchange tube 2, allowing the battery cell 1 to approach and reach an appropriate operation temperature. In this way, it is ensured that the battery operates normally in a safe state to supply power. Therefore, the heat exchange effect can be improved.

In some embodiments, as illustrated in FIG. 6, the input pipeline 3 and the output pipeline 4 of the heat exchange medium are arranged at two end sides of the battery cell 1 in an axial direction of the battery cell 1 and opposite to each other, with the plurality of battery cells 1 interposed between the input pipeline 3 and the output pipeline 4 of the heat exchange medium.

In an exemplary embodiment, a plurality of heat exchange medium input port 32 may be formed at a surface on the input pipeline 3 and serves as a connection port. An end of each heat exchange tube 2 in the first direction of the heat exchange tube 2 is connected to each heat exchange medium input port 32 in a sealing manner against liquid, to realize communication between the heat exchange flow passageway of the heat exchange tube 2 and the input pipeline 3. In addition, a plurality of heat exchange medium output port 42 may be formed at a surface of the output pipeline 4 and serves as a connection port. Another end of each heat exchange tube 2 in the first direction of each heat exchange tube 2 is connected to the corresponding heat exchange medium input port 32 in a sealing manner against the liquid, to realize communication between the heat exchange flow passageway of the heat exchange tube 2 and the output pipeline 4.

In addition, in the first direction, the input pipeline 3 and the output pipeline 4 of the heat exchange medium are respectively arranged at two sides of the battery cell 1 (two sides of the battery cell 1 in the axial direction of the battery cell 1). In this way, an orthotropic position relationship among the input pipeline 3 and the output pipeline 4 of the heat exchange medium, the battery cell 1, and the heat exchange tube 2 can be established.

In this way, by respectively arranging the input pipeline 3 and the output pipeline 4 of the heat exchange medium at the two sides of the battery cell 1 in the axial direction of the battery cell 1, it is possible to fully utilize the space at the two sides of the battery cell in the axial direction of the battery cell. Moreover, a complex connection structure between the heat exchange tube 2 and the input pipeline 3 and the output pipeline 4 of the heat exchange medium can be avoided. In addition, no complex pipelines are required. Therefore, ease of processing and ease of assembly can be improved.

In some embodiments, as illustrated in FIG. 6, each of the input pipeline 3 and the output pipeline 4 of the heat exchange medium extends in an arrangement direction of the battery cells 1.

As an example, referring to FIG. 6, the arrangement direction of the battery cells 1 refers to an arrangement direction of the battery cells 1 in each of three layers of battery cells 1. The input pipeline 3 and the output pipeline 4 of the heat exchange medium may be adjusted to be longer or shorter in the arrangement direction of the battery cell 1. For example, a length of each of the input pipeline 3 and the output pipeline 4 of the heat exchange medium may be set to be substantially same as an arrangement length of the battery cells 1. In addition, a thickness of each of the input pipeline 3 and the output pipeline 4 of the heat exchange medium (a dimension of the battery cell 1 in the axial direction of the battery cell 1) may be set as desired, for example, based on an overall volume of the battery and a capacity of a designed heat exchange circulation system.

Therefore, since the input pipeline 3 and the output pipeline 4 of the heat exchange medium with corresponding lengths can be arranged based on the arrangement of the battery cells 1, the cooling or heating of each battery cell 1 can be ensured with a simple structure. Therefore, the structure is simple, and the use safety of the battery is improved.

In some embodiments, the temperature sensor 5 is disposed at an outer surface of the at least one heat exchange tube 2 in contact with a middle part of each of the plurality of battery cells 1 in a length direction of the battery cell 1.

In some embodiments of the present disclosure, it has been found that, a part of the cylindrical battery cell 1 having a higher temperature is typically located in a middle of the cylindrical battery cell 1 along an axial length of the cylindrical battery cell 1. Therefore, temperature monitoring at this part is advantageous for monitoring of the temperature and safety of the entire battery cell.

In this way, since the temperature sensor 5 is disposed at the position where the temperature sensor 5 is in contact with the part of the battery cell having the high temperature, a change in the temperature of the battery cell can be reliably monitored. In addition, the use safety of the battery can be reliably ensured.

An embodiment of the present disclosure further provides a battery thermal management system applied in a battery. The battery includes a plurality of battery cells arranged proximate to each other. The battery thermal management system includes at least one heat exchange tube 2, a temperature sensor 5, and a signal acquisition circuit 6. The at least one heat exchange tube 2 is located in a gap formed between adjacent ones of the plurality of battery cells 1. The temperature sensor 5 is disposed at an outer surface of the at least one heat exchange tube 2 in contact with each of the plurality of battery cells 1. The signal acquisition circuit 6 is electrically connected to the temperature sensor 5 and configured to receive a signal from the temperature sensor.

As mentioned above, the battery involved herein is described by taking the cylindrical battery cell 1 as an example. As described above, the heat exchange tube 2 is located in the gap between adjacent cylindrical battery cells 1. The temperature sensor 5 can sense the temperature of the battery cell 1 around the temperature sensor 5. The signal acquisition circuit 6 is electrically connected to the temperature sensor 5 to acquire temperature data. Therefore, the battery management system can carry out effective control based on the temperature data. For example, when it is detected that the temperature is too high, warnings, prompts, or even battery shutdown may be initiated.

Therefore, since the heat exchange tube 2 is disposed in the gap between the adjacent battery cells 1, each battery cell 1 can be effectively cooled or heated. In addition, since the temperature sensor 5 is disposed at the outer surface of the heat exchange tube 2 in contact with the battery cell 1, an internal temperature of the battery cell can be monitored more accurately. Further, since the signal acquisition circuit 6 for receiving the signal from the temperature sensor 5 is provided, thermal management can be carried out based on the temperature data measured by the temperature sensor. Therefore, the safety can be improved.

In some embodiments, as illustrated in FIG. 6, the battery thermal management system further includes an input pipeline 3 and an output pipeline 4 of a heat exchange medium. The least one heat exchange tube 2 internally has a heat exchange flow passageway. The heat exchange flow passageway of the least one heat exchange tube 2 is in communication with the input pipeline 3 and the output pipeline 4 of the heat exchange medium to form a circulation flow passageway of the heat exchange medium. For constitution of the circulation flow passageway, a configuration and connection between the heat exchange tube 2 and the input pipeline 3 and the output pipeline 4 of the heat exchange medium, and the like, reference may be made to the embodiments as described above, and the description thereof will be omitted herein.

Therefore, it is possible to for the exchange medium to circulate in the heat exchange tube. Therefore, it is possible to improve the heat exchange effect and ensure the heat management efficiency.

In some embodiments, each of the plurality of battery cells 1 is a cylindrical battery cell 1. The temperature sensor 5 is disposed at an outer surface of the at least one heat exchange tube 2 in contact with a middle part of the cylindrical battery cell 1 in a length direction of the cylindrical battery cell 1.

Since the temperature sensor 5 is disposed at the position where the temperature sensor 5 is in contact with the part of the battery cell 1 having the high temperature, the change in the temperature of the battery cell can be reliably monitored to carry out the thermal management of the battery. Therefore, the use safety of the battery can be further ensured.

Embodiments of the present disclosure also provide an electric device. The electric device includes the battery module according to the embodiments of the present disclosure, or the electric device includes a battery and the battery thermal management system according to the embodiments of the present disclosure. The battery includes a plurality of battery cells arranged proximate to each other.

Therefore, the safety of using the battery module by the electric device can be ensured.

Hereinafter, as an example, exemplary embodiments of the present disclosure will be described.

As illustrated in FIG. 6, the battery includes a plurality of cylindrical battery cells 1 arranged proximate to each other. The heat exchange tube 2 illustrated in FIG. 3 is interposed into each gap formed between the cylindrical battery cells 1 to form an arrangement pattern illustrated in FIG. 5.

After being assembled as illustrated at parts denoted by the reference numerals 1 and 2 in FIG. 6, the input pipeline 3 and the output pipeline 4 of the heat exchange medium are respectively arranged at two ends (two ends in the axial direction of the cylindrical battery cell 1) of an array formed by arranging the cylindrical battery cells 1. An end of each heat exchange tube 2 is connected to and in communication with a heat exchange medium input port located at a surface of the input pipeline 3 facing towards a heat exchange tube. Another end of each heat exchange tube 2 is connected to and in communication with the heat exchange medium output port at a surface of the output pipeline 4 facing towards the heat exchange tube side. Therefore, the input pipeline 3 and the output pipeline 4 of the heat exchange medium and the heat exchange tube 2 are in communication with other pipelines in communication with the heat exchange medium inlet 31 and the heat exchange medium outlet 41, to form a circulation pipeline of the heat exchange medium. Heat management is performed on each battery cell 1 through the circulation of the heat exchange medium in the circulation pipeline, allowing the battery to reach or maintain a suitable operation temperature.

In addition, the temperature sensor 5 is disposed at an approximate center of the outer surface of the heat exchange tube 2. A temperature of an outer surface of the battery cell 1 can be obtained by the temperature sensor 5. Thus, the temperature of the outer surface of the battery cell is closer to a temperature inside the battery. Therefore, the battery temperature can be monitored more accurately. In addition, temperature signals from the temperature sensors 5 are acquired through the signal acquisition circuit 6, thereby realizing acquisition and monitoring of the temperature data, which in turn achieving analysis, thermal management and the like based on the temperature data.

The embodiments of the present disclosure have been described above. However, those skilled in the art should know that the present disclosure is not limited to the above embodiments. The above embodiments are merely examples. Embodiments having substantially the same constitution as that of the technical idea and providing the same effect within the scope of the present disclosure all fall within the scope of the present disclosure. In addition, various modifications made to the embodiments by those skilled in the art and other embodiments constructed by combining some of the constitution elements in the embodiments also fall within the scope of the present disclosure.

## Claims

1. A battery module, **characterized by**:
a plurality of battery cells arranged proximate to each other; and
at least one heat exchange tube of an elongated shape, each of the at least one heat exchange tube being located in a gap defined between adjacent ones of the plurality of battery cells, and the heat exchange tube being provided with a temperature sensor at an outer surface of the heat exchange tube.

2. The battery module according to claim 1, wherein the plurality of battery cells comprises more than three battery cells,
wherein the least one heat exchange tube is disposed in a gap formed by every three battery cells of the plurality of battery cells.

3. The battery module according to claim 2, wherein each of the battery cells is a cylindrical battery cell.

4. The battery module according to claim 3, wherein each of the at least one heat exchange tube is in a prism shape and capable of filling the gap formed by every three cylindrical battery cells.

5. The battery module according to claim 4, wherein each of the at least one heat exchange tube is formed into the elongated shape in an axial direction of the cylindrical battery cell, and has an arc-shaped surface following a shape of a part of an outer peripheral surface of each cylindrical battery cell.

6. The battery module according to any one of claims 1 to 5, wherein:
each of the at least one heat exchange tube is of a hollow structure and internally has a heat exchange flow passageway;
each of the at least one heat exchange tube has an end connected to an input pipeline of a heat exchange medium and another end connected to an output pipeline of the heat exchange medium; and
the heat exchange flow passageway of each of the at least one heat exchange tube is in communication with the input pipeline and the output pipeline of the heat exchange medium.

7. The battery module according to claim 6, wherein the input pipeline and the output pipeline of the heat exchange medium are disposed at two end sides of the battery cell in an axial direction of the battery cell and opposite to each other, with the plurality of battery cells interposed between the input pipeline and the output pipeline of the heat exchange medium.

8. The battery module according to claim 6 or 7, wherein each of the input pipeline and the output pipeline of the heat exchange medium extends in an arrangement direction of the plurality of battery cells.

9. The battery module according to any one of claims 1 to 8, wherein the temperature sensor is disposed at an outer surface of the at least one heat exchange tube in contact with a middle part of each of the plurality of battery cells in a length direction of the battery cell.

10. A battery thermal management system, applied in a battery comprising a plurality of battery cells arranged proximate to each other, **characterized in that** the battery thermal management system comprises:
at least one heat exchange tube located in a gap defined between adjacent ones of the plurality of battery cells;
a temperature sensor disposed at an outer surface of the at least one heat exchange tube in contact with each of the plurality of battery cells; and
a signal acquisition circuit electrically connected to the temperature sensor and configured to receive a signal from the temperature sensor.

11. The battery thermal management system according to claim 10, further comprising an input pipeline and an output pipeline of a heat exchange medium, wherein:
the least one heat exchange tube internally has a heat exchange flow passageway; and
the heat exchange flow passageway of the least one heat exchange tube is in communication with the input pipeline and the output pipeline of the heat exchange medium to form a circulation flow passageway of the heat exchange medium.

12. The battery thermal management system according to claims 10 or 11, wherein:
each of the plurality of battery cells is a cylindrical battery cell; and
the temperature sensor is disposed at an outer surface of the at least one heat exchange tube in contact with a middle part of the cylindrical battery cell in a length direction of the cylindrical battery cell.

13. An electric device, comprising the battery module according to any one of claims 1 to 9.

14. An electric device, comprising:
a battery comprising a plurality of battery cells arranged proximate to each other; and
the battery thermal management system according to any one of claims 10 to 12.
